Europäisches Patentamt

European Patent Office

Office européen des brevets

(11) Veröffentlichungsnummer: **0 136 457**
A2

# (12) EUROPÄISCHE PATENTANMELDUNG

(21) Anmeldenummer: 84109031.9

(22) Anmeldetag: 31.07.84

(51) Int. Cl.⁴: **F 16 K 11/065**
 F 15 B 15/20

(30) Priorität: 01.09.83 DE 3331582

(43) Veröffentlichungstag der Anmeldung:
 10.04.85 Patentblatt 85/15

(84) Benannte Vertragsstaaten:
 DE FR GB IT NL SE

(71) Anmelder: Dr.Ing.h.c. F. Porsche Aktiengesellschaft
 Porschestrasse 42
 D-7000 Stuttgart 40(DE)

(72) Erfinder: Bardoll, Meinrad
 Im Pfaffengrund 4
 D-7560 Gaggenau 19(DE)

(54) 4/3-Wegeventil.

(57) Das rohrförmige Ventilgehäuse eines 4/3-Wegeventils besitzt an seiner Längsseite einen mittigen Rücklaufanschluß zu einem Vorratsbehälter für Hydraulikflüssigkeit, links und rechts vom Rücklaufanschluß liegen symmetrisch dazu je ein Arbeitsanschluß zur Vorder- bzw. Rückseite eines Hydraulikkolbens sowie je ein Pumpenanschluß zu einer mit konstantem Druck fördernden Pumpe. Diese Hydraulikanschlüsse sind durch zwei mit dazwischenliegender Schraubenfeder gegenläufig arbeitenden Steuerkolben steuerbar, deren Stirnseiten durch elektromagnetisch betätigte Vorsteuerventile mit Pumpendruck beaufschlagbar sind. Das bei Links- bzw. Rechtslauf des Hydraulikkolbens an der einen Kolbenseite verdrängte Volumen der Hydraulikflüssigkeit gelangt über die beiden Arbeitsanschlüsse zur anderen Kolbenseite.

./...

Fig.1

- 2 -

0136457

4/3-Wegeventil

Die Erfindung betrifft ein 4/3-Wegeventil zum Steuern des Hydraulikkolbens einer hydraulischen Schaltvorrichtung nach dem Oberbegriff des Anspruchs 1.

Ein solches 4/3-Wegeventil, das vier Leitungsanschlüsse in drei Schaltstellungen in vorbestimmter Weise miteinander verbindet oder absperrt, ist in dem Buch "Ölhydraulik", F. und D. Findeisen, Seite 140, 3. Auflage, Springer-Verlag 1978, beschrieben. Die beiden zur Vorder- und Rückseite des Hydraulikkolbens führenden Arbeitsanschlüsse sind in neutraler Schaltstellung gesperrt; der Pumpenanschluß ist mit dem Rücklaufanschluß verbunden und die Hydraulikflüssigkeit fließt drucklos ab. In den beiden weiteren Schaltstellungen wird für den Rechts- und Linkslauf des Hydraulikkolbens der eine Arbeitsanschluß mit dem Pumpenanschluß und der andere Arbeitsanschluß mit dem Rücklaufanschluß verbunden und umgekehrt. Beim Umschalten von Rechts- auf Linkslauf wird die Hydraulikflüssigkeit auf der Vorderseite des Hydraulikkolbens über den Arbeitsanschluß und einen Rücklaufanschluß in den Vorratsbehälter verdrängt, während zugleich eine gleich große Menge Hydraulikflüssigkeit über den anderen Arbeitsanschluß aus dem Vorratsbehälter angesaugt und zur Rückseite des Hydraulikkolbens gesaugt wird. Hierdurch ergibt sich ein hoher Durchflußwiderstand, der insbesondere bei niederen Temperaturen der Hydraulikflüssigkeit infolge der höheren Zähigkeit spürbar wird. Nachteilig wirkt sich das besonders dann aus, wenn der Hydraulikkolben durch Federkraft in die neutrale Ausgangslage zurückgestellt wird, da in diesem Falle durch die Feder neben der Reibungskraft am Hydraulikkolben auch die Kraft zum Verdrängen der Hydraulikflüssigkeit aufgebracht werden muß. Ein rasches Umschalten des Hydraulikkolbens ist unter diesen Umständen nicht möglich.

Es ist die Aufgabe der Erfindung, ein 4/3-Wegeventil zur Steuerung eines Hydraulikkolbens zu entwickeln, das beim Umschalten des Hydraulikkolbens von Rechts- auf Linkslauf und umgekehrt der dabei verdrängten Flüssigkeit einen nur geringen Widerstand entgegensetzt, so daß die Umschaltung rasch erfolgen kann.

Zur Lösung dieser Aufgabe dienen die im Kennzeichen des Anspruchs 1 aufgeführten Merkmale. Da der Rücklaufanschluß etwa mittig am Ventilgehäuse liegt und die beiden Arbeitsanschlüsse links und rechts davon angeordnet sind, kann die von der einen Kolbenseite verdrängte Flüssigkeit durch den einen Arbeitsanschluß hindurch direkt in den anderen Arbeitsanschluß und von dort zur anderen Seite des Hydraulikkolbens strömen, ohne daß die Hydraulikflüssigkeit zuvor, wie bei dem bekannten 4/3-Wegeventil, die Leitungen zu dem Vorratsbehälter passieren muß. Da der Strömungswiderstand bei Verwendung des erfindungsgemäßen 4/3-Wegeventils sehr nieder ist, läßt sich der Hydraulikkolben sehr rasch umschalten und ist gut geeignet zum automatischen Betätigen der Gangschaltung eines Kraftfahrzeuges. Um den einen Steuerkolben bei Druckbeaufschlagung des anderen Steuerkolbens schnell und sicher in seine neutrale Ausgangslage zurückzustellen, sind nach Anspruch 2 an den Stirnflächen beider Steuerkolben Fortsätze angebracht, die bei jeder Schaltbewegung gegenseitig zur Anlage kommen und somit zusätzlich zur federnden Verbindung über die Schraubenfeder eine direkte, starre mechanische Verknüpfung der Steuerkolben-Schaltbewegungen bewirken.

Die Steuerkolben sind in dem rohrförmigen Gehäuse geführt, dessen Wandung aber durch die Leitungsanschlüsse unterbrochen ist. Durch einen Führungskörper gemäß Anspruch 3 wird sichergestellt, daß die Steuerkolben auch bei Überstreichen des Leitungsanschlußbereiches eine ausreichende Führung erhalten.

Ein Ausführungsbeispiel der Erfindung ist in der Zeichnung dargestellt und wird nachfolgend erläutert. Es zeigen

Fig. 1    eine hydraulische Schaltvorrichtung mit 4/3-Wege ventil,

Fig. 2    einen Querschnitt des 4/3-Wegeventils,

Fig. 3    einen Führungskörper für den Steuerkolben.

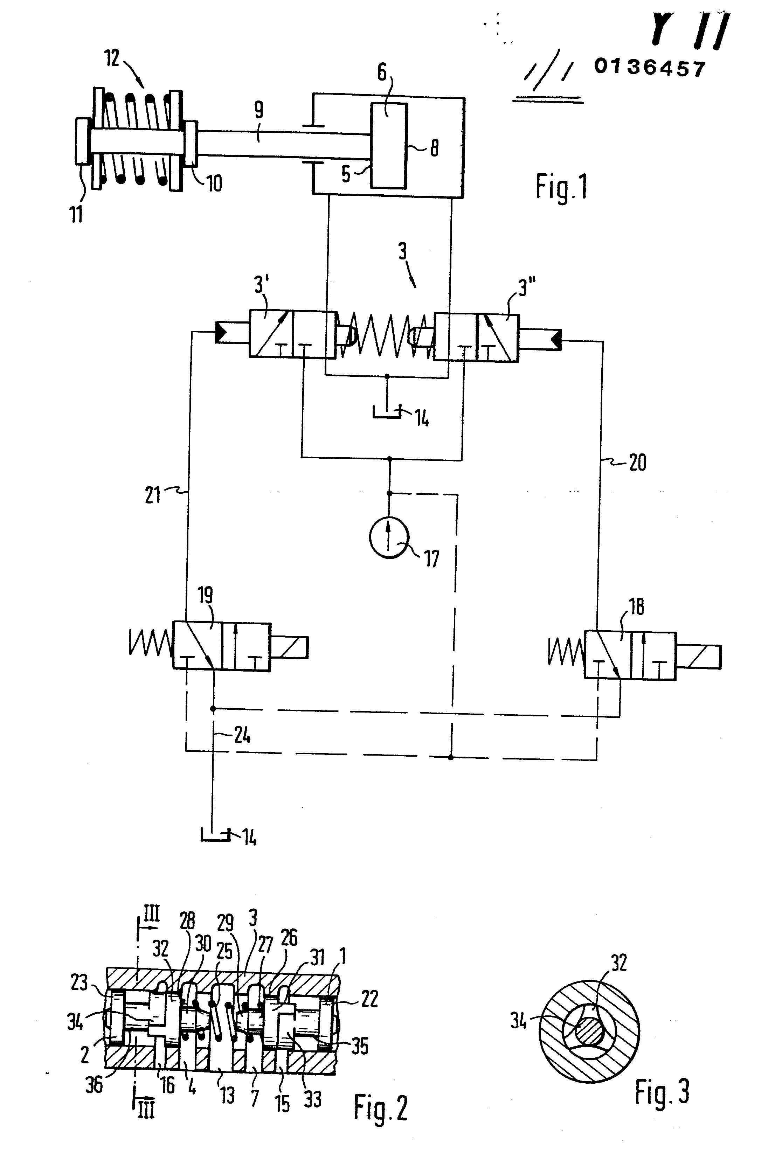

In Fig. 1 sind die beiden, die Steuerkolben 1 und 2 enthaltenden Teilabschnitte 3' und 2' eines einstückigen, rohrförmigen Ventilgehäuses 3 abgetrennt dargestellt, um den Hydraulik-Schaltplan mit üblichen Symbolen deutlicher darstellen zu können.

Der linke Teilabschnitt 3' ist durch einen Arbeitsanschluß 4 und eine Hydraulikleitung mit der Vorderseite 5 eines in einem Hydraulikgehäuse längsgeführten Hydraulikkolbens 6 verbunden; der rechte Teilabschnitt 3" steht über einen Arbeitsanschluß 7 und eine Hydraulikleitung mit der Rückseite 8 des Hydraulikkolbens 6 in Verbindung. Am Hydraulikkolben 6 ist eine Schaltstange 9 angebracht, deren freies Ende mit zwei Anschlägen 10 und 11 beiderseits einer federnden Rückstellvorrichtung 12 anliegt, die den nach links oder rechts ausgelenkten Hydraulikkolben 6 nach Wegnahme der Druckbelastung jeweils in die gezeichnete neutrale Ausgangslage zurückstellt.

Mittig zwischen den Arbeitsanschlüssen 4 und 7 liegt am Ventilgehäuse 3 der für beide Steuerkolben 1 und 2 gemeinsame Rücklaufanschluß 13 zu einem Vorratsbehälter 14 mit Hydraulikflüssigkeit. Auf den anderen Seiten der Arbeitsanschlüsse 4 und 7 sind symmetrisch zum Rücklaufanschluß 13 zwei Pumpenanschlüsse 15 und 16 angeordnet, die über Druckleitungen an einer mit konstantem Druck fördernde Pumpe 17 angeschlossen sind. Mit dieser Pumpe 17 sind über elektromagnetisch betätigte Vorsteuerventile 18, 19 sowie Leitungen 20, 21 auch die Stirnseiten 22, 23 der Steuerkolben 1, 2 mit Druck beaufschlagbar. In der gezeichneten Stellung sind die Vorsteuerventile 18, 19 ausgeschaltet; die Stirnseiten 22, 23 der Steuerkolben 1, 2 sind über drucklose Leitungen und Vorsteuerventile 18, 19 mit einer gemeinsamen Rücklaufleitung 24 zum Vorratsbehälter 14 verbunden.

Wird nun z.B. das rechte Vorsteuerventil 18 geschaltet, so wird Pumpendruck auf den rechten Steuerkolben 1 gegeben, so daß er sich unter Verspannung der zwischen den Steuerkolben 1, 2 angeordneten Schraubenfeder 25 soweit nach links bewegt, bis seine Steuerkante 26 die Verbindung vom Pumpenanschluß 15 zum Arbeitsanschluß 7 freigibt. Somit kann der Pumpendruck an der Rückseite 8 des Hydraulikkolbens 6 wirksam werden und bewegt ihn nach links.

Soll der Hydraulikkolben 6 und die Schaltstange 9 nach rechts bewegt werden, so wird das rechte Vorsteuerventil abgeschaltet, so daß der Druck an der Stirnseite 22 des rechten Steuerkolbens über die Rücklaufleitung 24 abgebaut wird. Gleichzeitig wird das linke Vorsteuerventil eingeschaltet und die Stirnseite 23 des linken Steuerkolbens 2 mit Druck beaufschlagt. Der hierdurch nach rechts bewegte Steuerkolben öffnet die Verbindung vom Pumpenanschluß 16 zum Arbeitsanschluß 4 und gibt so den Pumpendruck auf die Vorderseite 5 des Hydraulikkolbens 6. Zugleich stellt er über die Schraubenfeder 5 den rechten Steuerkolben in seine Ausgangslage zurück.

Bei Rechtsbewegen des Hydraulikkolbens 6 wird die auf seiner Rückseite 8 befindliche Hydraulikflüssigkeit durch die miteinander in Verbindung stehenden Arbeitsanschlüsse 7 und 4 hindurch zur Vorderseite 5 des Hydraulikkolbens hin verdrängt. Da die Hydraulikflüssigkeit dabei nicht die langen Leitungen zum Vorratsbehälter und zurück passieren muß, sondern auf direktem Weg von der einen zur anderen Seite des Hydraulikkolbens verdrängt wird, kann die Umschaltung von Rechts- auf Linkslauf und ungekehrt sehr rasch erfolgen.

0136457

Um die Schaltgeschwindigkeit und Schaltsicherheit weiter zu erhöhen, sind die federseitigen Stirnflächen 27, 28 der Steuerkolben 1, 2 mit koaxialen Fortsätzen 29, 30 versehen. Wenn der eine Steuerkolben aus seiner Ausgangslage in Arbeitsstellung geht, kommt sein Fortsatz am Fortsatz des anderen Steuerkolbens zur Anlage und schiebt ihn in seine Ausgangslage zurück. Auf diese Weise wird zusätzlich zur federnden Kopplung eine starre mechanische Verbindung der beiden Steuerkolben 1, 2 geschaffen.

Die Steuerkolben 1, 2 sind in dem Ventilgehäuse 3 längsgeführt. Da dessen Wand aber im Bereich der Hydraulikanschlüsse mehrfach unterbrochen ist, sind für die beiden Steuerkolben 1, 2 zusätzlich sternförmige Führungskörper 31, 32 vorgesehen, die im Ventilgehäuse 3 zentrisch gehalten sind und mit mittigen Naben 33, 34 die Steuerkolben 1, 2 an deren Ausdrehungen 35, 36 umgreifen.

Patentansprüche

1. 4/3-Wegeventil zum Steuern des Hydraulikkolbens einer hydraulischen Schaltvorrichtung, mit einem durch Federkraft in Ausgangslage gehaltenen Steuerkolben, der in einem rohrförmigen Gehäuse längsgeführt ist und dabei Arbeitsanschlüsse des Gehäuses zum Hydraulikzylinder, Pumpenanschlüsse zu einer mit konstantem Druck fördernden Pumpe und einen Rücklaufanschluß zu einem Vorratsbehälter steuert, dadurch gekennzeichnet, daß das Ventilgehäuse (3) zwei gegenläufig arbeitende Steuerkolben (1, 2) und eine zwischen ihren einen Stirnflächen (27, 28) liegende Schraubenfeder (25) enthält, während die anderen Stirnflächen (22, 23) der Steuerkolben (1, 2) über Druckleitungen mit Vorsteuerventilen (18, 19) verbunden sind, und daß jedem der beiden Steuerkolben (1, 2) ein Arbeitsanschluß (7, 4) bzw. ein Pumpenanschluß (15, 16) zugeordnet ist, und daß für beide Steuerkolben (1, 2) ein gemeinsamer Rücklaufanschluß (12) vorgesehen ist, der etwa mittig zwischen den Arbeitsanschlüssen (4, 7) liegt.

2. Wegeventil nach Anspruch 1, dadurch gekennzeichnet, daß an den federseitigen Stirnflächen (27, 28) beider Steuerkolben (1, 2) Fortsätze (29, 30) so angebracht sind, daß der Fortsatz des einen Steuerkolbens bei dessen Druckbeaufschlagung am Fortsatz des anderen Steuerkolbens zur Anlage kommt und ihn in Ausgangslage zurückschiebt.

3. Wegeventil nach Anspruch 1 und 2, dadurch gekennzeichnet, daß zur Längsführung der Steuerkolben (1, 2) sternförmige Führungskörper (31, 32) vorgesehen sind, die im Ventilgehäuse (3) zentriert und gehalten sind und deren Naben (33, 34) zylindrische Ausdrehungen (35, 36) der Steuerkolben umfassen.

Fig.1

Fig.2

Fig.3